# EUROPÄISCHE PATENTSCHRIFT

(11) **EP 0 457 030 B1**
(45) Veröffentlichungstag und Bekanntmachung des Hinweises auf die Patenterteilung: **25.08.1993**
(21) Anmeldenummer: 91105800.6
(22) Anmeldetag: 11.04.1991
(51) Int. Cl.: B60T 17/08

(54) **Federspeicherzylinder für druckluftbetätigte Fahrzeugbremsen**
Spring brake cylinder for compressed air operated vehicle brakes
Cylindre de frein à ressort pour freins actionnés par moyen de pression pour véhicules routiers

(30) Priorität: 14.05.1990 DE 4015477
(43) Veröffentlichungstag der Anmeldung: 21.11.1991
(73) Patentinhaber: KNORR-BREMSE AG, 80710 München (DE)
(72) Erfinder: Bartlechner, Manfred, W-8031 Wessling (DE); Fuderer, Erich, W-8034 Germering (DE); Haberzeth, Thomas, W-8000 München 80 (DE); Loebner, Reinhard, W-8260 Mühldorf (DE); Spachtholz, Johann, W-8000 München 80 (DE)

(56) Entgegenhaltungen:
- EP-A- 0 031 057
- DE-A- 2 248 779
- DE-A- 3 723 683
- US-A- 3 182 566

## Beschreibung

Die Erfindung betrifft einen Federspeicherzylinder für druckluftbetätigte Fahrzeugbremsen, mit einem vom in einer Lösekammer herrschenden Druck entgegen der Kraft einer Speicherfeder beaufschlagten Bremskolben und mit einer Sperrvorrichtung zum formschlüssigen Verriegeln des Bremskolbens in dessen gespannter Speicherfeder entsprechender Lösestellung, wobei die Lösekammer durch eine Düse mit einem Druckluft-Speiseanschluß verbunden ist und wobei die Sperrvorrichtung einen Sperrkolben zum Schalten einer mechanischen Sperre für den Bremskolben aufweist und der Sperrkolben in Einrastrichtung der Sperre vom lösekammerseitigen Druck nach der Düse entgegen dem vor der Düse anstehenden Druck beaufschlagt ist.

Ein derartiger Federspeicherzylinder ist aus der DE-A-27 03 292 bekannt. Dem Druckluft-Speiseanschluß des Federspeicherzylinders wird hierbei der auch einem Betriebsbremszylinder zuzuführende Bremsdruck zugeführt. Der Sperrkolben ist in einem speicherfederseitig den Federspeicherzylinder verlängernden Abschnitt mit die Achse des Federspeicherzylinders senkrecht schneidender Achsrichtung angeordnet. Durch diese Ausbildung des Federspeicherzylinders erhält dieser eine relativ große Länge, wobei der Sperrkolben jedoch nur mit bezogen auf den Bremskolben kleiner Beaufschlagungsfläche ausbildbar ist. Der von einer Feder in Sperrichtung belastete Sperrkolben vermag daher bei Druckabsenkungen am Druckluft-Speiseanschluß erst bei Auftreten relativ großer Druckdifferenzen an der Düse die Sperre zu lösen, der Bremskolben muß daher auch bei beachtlicher Druckabsenkung in der Lösekammer seine Lösestellung noch beibehalten und muß eine dementsprechend große Beaufschlagungsfläche aufweisen; der bekannte Federspeicherzylinder muß daher mit relativ großem Durchmesser ausgebildet werden.

Zum Vermeiden dieser Mängel ist es aus der DE-A-27 45 231 bekannt, einen üblichen, mit einer für Notlösevorrichtungen bekannten, druckluftaushebbaren Sperre ausgerüsteten Federspeicher vorzusehen, wobei der Druckluftbetätigung der Sperre jedoch eine aufwendige Ventilvorrichtung vorzuschalten ist.

Die beiden vorstehend erwähnten, bekannten Federspeicherzylinder sind insbesondere für Schienenfahrzeuge vorgesehen, sie dienen hierbei dazu, bei einem mit druckluftbeaufschlagter Betriebsbremse abgestellten Fahrzeug bei Druckluftbverlust durch Undichtigkeiten die allmählich abnehmende Bremskraft der Betriebsbremse durch Betätigen des Federspeicherzylinders zu ersetzen, bis letztlich letzterer allein die Fahrzeugbremse betätigt hält. Während normalen Brems- und Lösevorgängen der Betriebsbremse oder bei durch Leitungsbruch rascher Absenkung des Bremsdruckes soll der Federspeicherzylinder in seiner Lösestellung verharren.

Für druckluftbetätigte Schienenfahrzeugbremsen ist es bekannt, den Federspeicherzylinder mit einem Betriebsbremszylinder zu einem Kombizylinder zu kombinieren, wobei der Federspeicherzylinder nicht vom Bremsdruck der Betriebsbremse, sondern vom Druck in einem Druckluftvorratsbehälter für die Betriebsbremse beaufschlagt ist. Hierdurch wird erreicht, daß bei Erschöpfen des Druckluftvorrates und damit drohenden Ausfall der Betriebsbremse das Schienenfahrzeug abgebremst wird. Nachteilig bei diesen ohne Sperrvorrichtung ausgebildeten Federspeicherzylindern ist, daß bei Bruch seiner Druckluft-Speiseleitung der Federspeicherzylinder schlagartig in die Bremsstellung gelangt, das Schienenfahrzeug somit unvorhersehbar an ungeeigneten Streckenabschnitten zum Stehen gebracht werden kann.

Für druckluftgebremste Straßenfahrzeuge sind ähnliche Kombizylinder mit ähnlichen Mängeln bekannt; ein ungewolltes Einbremsen vermittels des Federspeicherzylinders infolge eines Leitungsbruches versucht man hierbei durch den Federspeicherzylinder vorgeschaltete, vermittels eines Handbremsventils schaltbare Ventileinrichtungen auszuschließen.

Aus der US-A-3 282 169 ist des weiteren ein Kombizylinder bekannt, bei welchem die Membrankolben eines Betriebsbremszylinders und eines Federspeicherzylinders zueinander gegensätzlich von einem Betriebsbremsdruck beaufschlagbar sind. Der Federspeicherzylinder weist eine Sperrvorrichtung zur Verriegelung in seiner Lösestellung auf, die Verriegelung ist durch willkürlich gesteuerte Wegnahme der Druckluftbeaufschlagung eines weiteren Kolbens lösbar. Dieser Kombizylinder ist nicht geeignet, bei einem mit betätigter Betriebsbremse abgestellte Fahrzeug bei allmählichem Druckluftverlust in der Betriebsbremse das Fahrzeug durch entsprechende, selbstättätige Betätigung des Federspeicherzylinders sicher gebremst zu halten.

Es ist Aufgabe der Erfindung, einen Federspeicherzylinder der eingangs genannten Art derart auszugestalten, daß die Sperrvorrichtung einerseits eine ausreichend große Beaufschlagungsflächen aufweisenden Sperrkolben beinhaltet, andererseits aber trotzdem bau-, raum- und formgünstig im Federspeicherzylinder unterbringbar ist. Durch die ausreichend großflächige Ausbildung des Sperrkolbens soll eine hohe Ansprechempfindlichkeit der Sperrvorrichtung erreicht werden, derart, daß bereits geringe Differenzdrücke an der Düse zum Schalten der Sperrvorrichtung ausreichen und somit der Federspeicherzylinder derart ausbildbar ist, daß dessen Bremskolben erst bei Beaufschlagen mit nahezu der vollen, am Druckluft-Speiseanschluß einspeisbaren Druckhöhe in die Lösestellung gelangt, wodurch bei relativ kleinem Durchmesser des Federspeicherzylinders doch hohe Kraftabgaben möglich sind.

Diese Aufgabe wird nach der Erfindung dadurch gelöst, daß der Sperrkolben als zum Bremskolben gleichachsiger und beidseitig wenigstens annähernd gleichgroße Beaufschlagungsflächen aufweisender Ringkolben ausgebildet ist, der radialinnen an einem zylindergehäusefesten Rohransatz wenigstens annähernd dicht geführt ist, der gegenüberliegend zum Bremskolben die Lösekammer und andererseits einen unmittelbar an den Druckluft-Speiseanschluß anschließenden Raum begrenzt und der von der Düse überbrückt ist. Die gleichachsige Anordnung von Sperr- und Bremskolben ermöglicht eine der geforderten, hohen Ansprechempfindlichkeit des ersteren ausreichend große Bemessung des Sperrkolbens bei doch bauraumsparender Konstruktion.

Nach der weiteren Erfindung vorteilhafte Ausbildungsmöglichkeiten eines derartigen Federspeicherzylinders sind in den Unteransprüchen aufgezeigt.

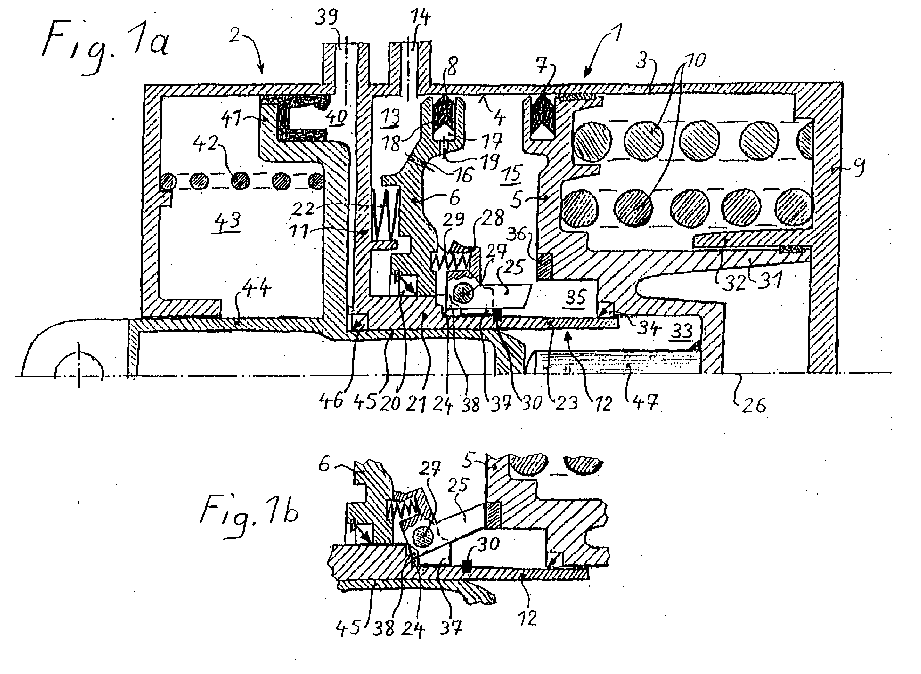

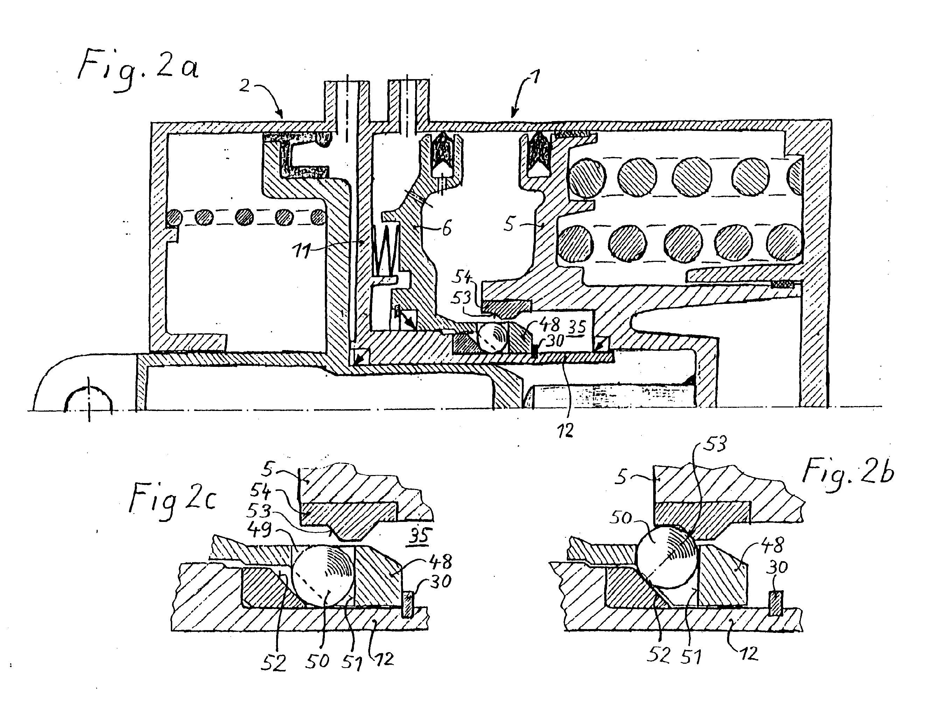

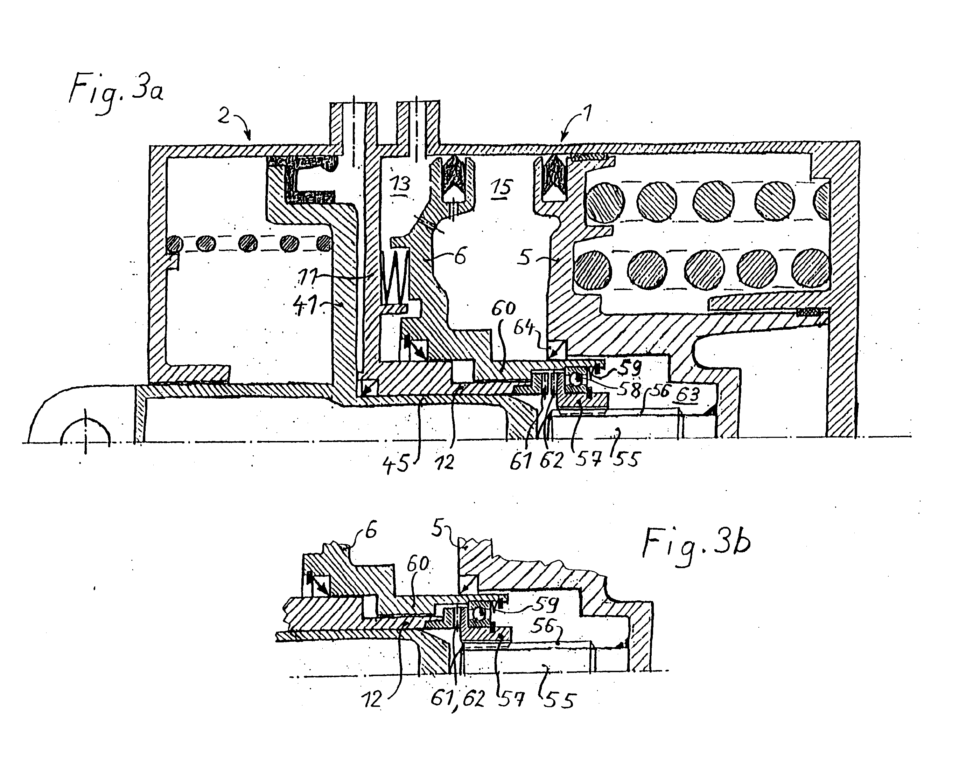

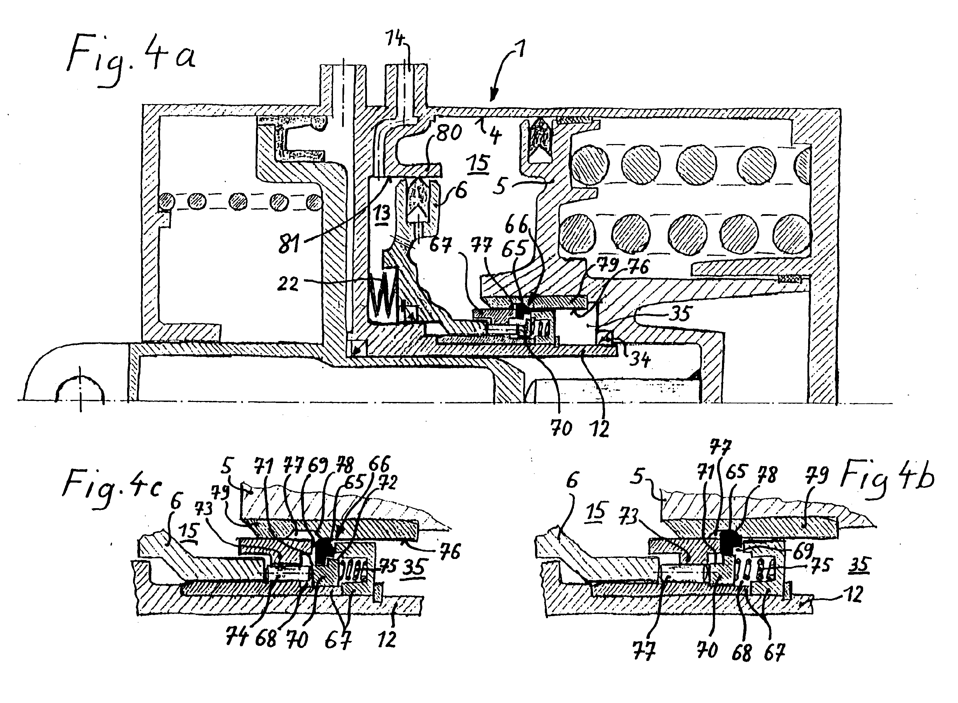

In den Zeichnungen Fig.1a, 2a ,3a und 4a sind unterschiedliche Ausführungsformen des Federspeicherzylinders jeweils in Ausbildung als Kombizylinder und in der durch Druckluftbeaufschlagung bewirkten Lösestellung mit gelöster bzw. nach Fig.4a lösbarer Sperre dargestellt. Die Fig.2c und 4c zeigen in vergrößertem Ausschnitt nochmals die gelöste Sperre des Federspeicherzylinders nach Fig.2a bzw. 4a. In den Figuren 1b, 2b bzw. 4b mit entsprechend Fig.2c bzw. 4c vergrößertem Maßstab und in Fig.3b sind die Sperren der entsprechenden Federspeicherzylinder in eingerastetem Zustand dargestellt.

In den Zeichnungen bezeichnen gleiche Bezugszahlen gleiche oder einander entsprechende Teile.

Die Fig.1a zeigt einen Kombizylinder, welcher aus einem Federspeicherzylinder 1 und einem gleichachsig an diesen angesetzten und mit ihm kombinierten Betriebsbremszylinder 2 besteht. Der Federspeicherzylinder 1 weist ein Zylindergehäuse 3 auf, an dessen innerer Zylinderwandung 4 axial zueinander versetzt ein Bremskolben 5 und ein Sperrkolben 6 vermittels Kolbendichtungen 7 bzw. 8 dicht geführt sind. Auf der dem Sperrkolben 6 abgewandten Seite ist zwischen dem Bremskolben 5 und einem das Zylindergehäuse 3 abschließenden Zylinderboden 9 eine gemäß der Zeichnung mehrteilig ausgebildete Speicherfeder 10 eingespannt. Zwischen dem Federspeicherzylinder 1 und dem Betriebsbremszylinder 2 ist eine gehäusefeste Querwand 11 angeordnet, welche zentrisch einen eine Durchbrechung umgebenden, in Richtung zum Bremskolben 5 auskragenden Rohransatz 12 trägt. Zwischen der Querwand 11 und dem Sperrkolben 6 befindet sich ein Raum 13, welcher durch einen Druckluft-Speiseanschluß 14 mit einer nicht dargestellten, zu einer ebenfalls nicht gezeigten Druckluftquelle führenden Rohrleitung verbindbar ist. Zwischen dem Bremskolben 5 und dem Sperrkolben 6 erstreckt sich eine Lösekammer 15, der in dieser herrschende Druck belastet den Bremskolben 5 entgegen der Kraft der Speicherfeder 10 und den Sperrkolben 6 in Verschieberichtung zum Raum 13 und zur Querwand 11. Eine den Sperrkolben 6 durchsetzende Bohrung bildet eine den Raum 13 mit der Lösekammer 15 verbindende Düse 16. Die dem Sperrkolben 6 zugehörenden Kolbendichtung 8 ist als ein in eine nach radialaußen offene Ringnut 17 eingesetzter Radialnutring 18 ausgebildet, welcher mit seiner radialäußeren Dichtkante gegen die Zylinderwandung 4 und seinen radialinneren, beidseitigen Dichtlippen gegen die Seitenwandungen der Ringnut 17 dichtet. Vom radialinneren Grund der Ringnut 17 geht eine letztere mit der Lösekammer 15 verbindende Bohrung 19 aus; der Radialnutring 18 bildet somit eine nur einseitig, in Strömungsrichtung von der Lösekammer 15 zum Raum 13 dichtende Kolbendichtung 8, in umgekehrter Strömungsrichtung vermag Druckluft aus dem Raum 13 an der diesem Raum zugewandten, von der Ringnut-Seitenwandung hierbei abklappenden Dichtlippe des Radialnutringes 18 vorbei durch die Ringnut 17 und die Bohrung 19 zur Lösekammer 15 überzuströmen. Der Sperrkolben 6 ist als Ringkolben ausgebildet, der radialinnen vermittels eines Dichtringes 20 abgedichtet auf einem verstärkten, unmittelbar an der Querwand 11 angesetzten Abschnitt 21 des Rohransatzes 12 geführt ist. Zwischen die Querwand 11 und den Sperrkolben 6 ist eine bezogen auf die Speicherfeder 10 sehr schwache Feder 22 eingespannt, welche den Sperrkolben 6 in Verschieberichtung zum Bremskolben 5 belastet. Der Übergang des Abschnittes 21 zu einem verjüngten Abschnitt 23 des Rohransatzes 12 bildet eine dem Bremskolben 5 zugewandten Ringschulter, welche als Widerlager 24 für eine Sperrklinke 25 dient. Die gemäß Fig.1a im wesentlichen als sich parallel zur Achse 26 des Federspeicherzylinders 1 erstreckender Hebel ausgebildete Sperrklinke 25 ist nahe ihres sperrkolbenseitigen Endes vermittels eines die Achse 26 des Federspeicherzylinders 1 senkrecht überkreuzenden Bolzens 27 drehbar an der lösekammerseitigen Seite des Sperrkolbens 6 nahe dessen radialinnerer Begrenzung angelenkt; eine zwischen einem radial auskragenden Ansatz 28 der Sperrklinke 25 und dem Sperrkolben 6 eingespannte Feder 29 hält die Sperrklinke 25 in der beschriebenen, durch Anlage an einem in den Rohransatz 12 eingelassenen Anschlagring 30 bestimmten Stellung. Seitens der Speicherfeder 10 weist der Bremskolben 5 einen Rohransatz 31 auf, mittels welchem er an einem entsprechendem Ansatz 32, der vom Zylinderboden 9 in Richtung zum Bremskolben 5 auskragt, verschieblich geführt ist; durch die axial versetzten Führungen des Bremskolbens 5 an der Zylinderwandung 4 und dem Ansatz 32 wird ein Verkanten des Bremskolbens 5 ausgeschlossen. In seinem zentralen Bereich weist der Bremskolben 5 eine Ausnehmung 33 auf, in welche der Rohransatz 12 eingreift und an deren Wandung ein Dichtring 34 vorgesehen ist, mittels welchem der Bremskolben 5 druckdicht auf dem verjüngten Abschnitt 23 des Rohransatzes 12 geführt ist. Im den Rohransatz 12 umgebenden Bereich weist der Bremskolben 5 eine zum Sperrkolben 6 hin offene Ausnehmung 35 auf, in welche die Sperrklinke 25 in ihrer in Fig.1a dargestgellten, zur Achse 26 parallelen Lage bei Annäherung der beiden Kolben einzutreten vermag. Anschließend an den radialäußeren Rand der Ausnehmung 35 trägt der Bremskolben 5 ein Anschlagstück 36, das aus einem im Vergleich zum Werkstoff des übrigen Bremskolbens 5 härteren Werkstoff gefertigt ist.In der aus Fig.1a ersichtlichen Lage hält die Feder 22 den Sperrkolben 6 mittels eines radialinneren Teiles 37 in Anlage am Anschlagring 30; eine der Achse 26 näher als der Bolzen 27 liegende, dem Sperrkolben 6 zugewandte Anschlagkante 38 der Sperrklinke 25 befindet sich dabei in geringem Abstand vor dem Widerlager 24.

Der Betriebsbremszylinder 2 weist einen vom durch einen Rohranschluß 39 in eine Kammer 40 einspeisbaren Betriebsbremsdruck beaufschlagbaren Kolben 41 auf, der andererseits von einer Kolbenrückdruckfeder 42 in einer Außenluftkammer 43 belastet ist. Der Kolben 41 trägt eine die Außendruckkammer 43 durchsetzende und ins Freie ragende Kolbenstange 44, an welche ein nicht gezeigtes Bremsbetätigungsgestänge anlenkbar ist. Gegenüberliegend zur Kolbenstange 44 trägt der Kolben 41 einen Stößel 45, welcher vermittels eines Dichtringes 46 abgedichtet verschieblich die Querwand 11 durchsetzt und innerhalb des Rohransatzes 12 vor einem weiteren Stößel 47 endet, welcher mit dem Bremskolben 5 verbunden ist.

In der Darstellung nach Fig.1a ist die Kammer 40 drucklos, im Raum 13 und durch die Düse 16 auch in der Lösekammer 15 herrscht Vorratsdruckhöhe.

Zum Betriebsbremsen und -lösen wird die Kammer 40 mit Betriebsbremsdruck beaufschlagt und wieder entlüftet, wobei der Kolben 41 sich in Richtung zur Außendruckkammer 43 verschiebt und wieder zurückbewegt; die Stößel 45 u 47 heben sich dabei vorübergehend voneinander ab. Alle übrigen Teile im Federspeicherzylinder 1 behalten während dieser Vorgänge die aus Fig.1a ersichtlichen und beschriebenen Stellungen bei.

Tritt, beispielsweise infolge eines Leitungsbruches, eine rasche Absenkung des Vorratsdruckes ein, so wird über den Druckluft-Speiseanschluß 14 der unmittelbar an diesen anschließende Raum 13 rasch in seinem Druck mitabgesenkt, während die Düse 16 den Druck in der Lösekammer 15 zurückhält, derart, daß in dieser nur eine langsame, allmähliche Druckabsenkung eintreten kann. Am Sperrkolben 6 wird daher eine Druckdifferenz wirksam, welche diesen Sperrkolben 6 alsbald entgegen der Kraft der Feder 22 in Richtung zur Querwand 11 verschiebt. Infolge der großen Beaufschlagungsflächen zu beiden Seiten des Sperrkolbens 6 genügt bereits eine zur normalen Vorratsdruckhöhe sehr geringe Druckdifferenz am Sperrkolben 6 zu dieser Verschiebung, in der Lösekammer 15 herrscht hierbei praktisch noch der volle Vorratsdruck und der Bremskolben 5 behält daher seine Stellung bei. Bei der Verschiebung des Sperrkolbens 6 läuft die Anschlagkante 38 der Sperrklinke 25 gegen das Widerlager 24 an, derart, daß bei weiterer Verschiebung des Sperrkolbens 6 bis zur Anlage an der Querwand 11 die Sperrklinke 25 um den Bolzen 27 aus der zur Achse 26 parallelen Lage gemäß Fig.1a in eine schräg nach radialaußen gerichtete Lage gemäß Fig.1b geschwenkt wird; das freie Ende der Sperrklinke 25 befindet sich dabei dicht vor dem Anschlagstück 36 des Bremskolbens 5. Falls nun durch die Düse 16 verzögert der in der Lösekammer 15 herrschende Druck allmählich derart absinkt, daß der Bremskolben 5 sich unter der Kraft der Speicherfeder 10 zu bewegen beginnt, so läuft der Bremskolben 5 mit seinem Anschlagstück 36 alsbald, nach einer nur sehr kurzen Hubstrecke, gegen die geeignet abgeschrägte Stirnfläche der Sperrklinke 25 an und wird somit in seiner Stellung verriegelt und festgehalten, wie es aus Fig.1b ersichtlich ist. Die kurze Hubstrecke des Bremskolbens 5 reicht dabei nicht aus, über die aus den Stößeln 47 und 45 gebildete Stößelvorrichtung 45,47 ein Bremsenanlegen bzw. ein Bremsen zu bewirken. Die Fahrzeugbremsen bleiben daher gelöst, es tritt infolge des Leitungsbruches keine unvorhersehbare und unerwünschte Bremsung des Fahrzeugs ein.

Der von der Speicherfeder 10 belastete Bremskolben 5 stützt sich dabei über die Sperrklinke 25 und weiter einerseits die Anlage der Anschlagkante 38 am Widerlager 24 und andererseits über den Bolzen 27 und den Sperrkolben 6 gegen den Abschnitt 21 bzw. die Querwand 11 und damit letztlich gegen das Zylindergehäuse 3 ab.

Wird der Vorratsdruck wieder aufgebaut und in den Raum 13 eingespeist, so beaufschlagt er den Sperrkolben 6 und zugleich wird durch die Düse 16 sowie am Radialnutring 18 vorbei durch die Ringnut 17 und die Bohrung 19 die Lösekammer 15 wieder druckbeaufschlagt. Bei ausreichender Druckbeaufschlagung wird der Bremskolben 5 wieder in die in Fig.1a dargestellte, rechte Endstellung zurückgedrückt. Der Sperrkolben 6 wird durch die Kraft der Feder 22 und eine evt1. zu Wiederaufladebeginn auftretende, geringe Druckdifferenz nach rechts gedrückt. Beim Bewegen des Sperrkolbens 6 hebt sich die Anschlagkante 38 der Sperrklinke 25 vom Widerlager 24 ab, durch Reibschluß zum Bemskolben 5 kann die Sperrklinke 25 jedoch solange ihre Schräglage beibehalten, bis der Sperrkolben 6 an den Anschlagring 30 anläuft und durch diesen an weiterer Bewegung gehindert wird und der Bremskolben 5 durch weiteren Druckanstieg in der Lösekammer 15 sich um seinen Resthub nach rechts verschiebt. Während dieses Resthubes gerät die Sperrklinke 25 außer Eingriff zum Anschlagstück 36 und die Feder 29 vermag sie somit wieder in die zur Achse 26 parallele Lage gemäß Fig.1a zurückzuschwenken. Damit ist der Ausgangzustand gemäß Fig.1a wieder erreicht.

Falls das Fahrzeug mit von einem Betriebsbremsdruck beaufschlagten Kolben 41 eingebremst abgestellt wird, kann durch Undichtigkeit ein allmählicher Druckluftverlust auftreten. Durch die nicht dargestellten Bremssteuerorgane tritt dabei anfänglich ein Druckausgleich zwischen dem Druckluftvorrat und dem Bremsdruck auf und sodann sinken beide Drücke durch den weiterhin anhaltendenen Druckluftverlust allmählich ab. Während dieser Vorgänge wird der im Raum 13 herrschende Druck ebenfalls langsam und allmählich abgesenkt, durch die Düse 16 tritt dabei ein praktisch unverzögerter Druckausgleich zur Lösekammer 15 auf, so daß auch in der Lösekammer 15 der Druck gleichartig mitabgesenkt wird und am Sperrkolben 16 kein Differenzdruck wirksam wird. Der Sperrkolben 6 behält daher seine aus Fig.1a ersichtliche Lage bei und die Sperrklinke 25 verbleibt in ihrer zur Achse 26 parallelen Lage. Bei entsprechender Druckabsenkung in der Lösekammer 15 verschiebt sich der Bremskolben 5 nach links, wobei nunmehr jedoch die Sperrklinke 25 in die Ausnehmung 35 eintritt und die Bewegung nicht behindert. Über die Stößelvorrichtung 45,47 belastet die Speicherfeder 10 somit alsbald die Kolbenstange 44, wodurch die durch die erwähnte Druckabsenkung in der Kammer 40 verursachte, verminderte Kraftabgabe des Kolbens 41 ausgeglichen und die Fahrzeugbremse fest zugespannt bleibt. Bis zum völligen Druckabbau in der Kammer 40, dem Raum 13 und der Lösekammer 15 ersetzt somit die Kraft der Speicherfeder 10 vollständig die Kraftausübung des Kolbens 41, das Fahrzeug verbleibt eingebremst abgestellt.

Wird nachfolgend die Druckluftanlage des Fahrzeuges wieder gefüllt, so kehrt die Druckbeaufschlagung der Kammer 40 zurück, so daß der Betriebsbremszylinder 2 wieder eine Bremsenzuspannkraft abgibt, während zugleich auch durch den Raum 13 und die Düse 16 sowie parallel zur Düse 16 an der Kolbendichtung 8 vorbei durch die Ringnut 17 und die Bohrung 19 ein rascher Druckaufbau in der Lösekammer 15 erfolgt, wodurch der Bremskolben 5 gegen seine rechte Endstellung zurückgedrückt wird; die Bremskrafterzeugung geht also ohne zwischenzeitliche Bremskraftaddition vom Federspeicherzylinder 1 auf den Betriebsbremszylinder 2 über. Nach Lösen der Betriebsbremse befinden sich alle Teile wieder in der aus Fig.1a ersichtlichen Lage.

Bei prinzipiell gleichem Grundaufbau und gleicher Funktionsweise ist es selbstverständlich möglich, die Sperre in unterschiedlicher Weise auszubilden, wozu die Figuren 2a, 3a und 4a vorteilhafte, weitere Ausführungsformen zeigen.

Beim Federspeicherzylinder nach Fig.2a ist eine Kugelsperre vorgesehen. Der Sperrkolben 6 weist hierzu an seinem radial inneren Rand einen in Richtung zum Bremskolben 5 und in dessen Ausnehmung 35 eingreifenden Fortsatz 48 auf, welcher in der rechten Endlage des Sperrkolbens 6 zur Anlage am Anschlagring 30 gelangt, wie es auch aus Fig.2c in vergrößertem Maßstab ersichtlich ist. Der Fortsatz 48 weist eine Radialbohrung 49 auf, in welcher eine Sperrkugel 50 gelagert ist. Es ist zweckmäßig, den Fortsatz 48 den Rohransatz 12 zylindrisch umgebend auszubilden und an seinem Umfang gleichmäßig verteilt mit mehreren Radialbohrungen 49 und Sperrkugeln 50 zu versehen. Der dem Sperrkolben 6 abgewandte Wandungsabschnitt der Radialbohrung 49 dient als Widerlager bzw. Kugelmitnahmefläche 51 durch welche die Sperrkugel 50 beim Verschieben des Sperrkolbens 6 nach links mitgenommen wird. In Richtung zur Querwand 11 unmittelbar an die Sperrkugel 50 anschließend weist der Rohransatz 12 eine nach radialaußen ansteigende Kugelauflauffläche 52 auf. Der Bremskolben 5 besitzt in der Ausnehmung 35 nahe deren dem Sperrkolben 6 zugewandten Mündung eine schräg nach rechts und radial innen gerichtete, ggf. gerundete Anschlagfläche 53, welche ggf. an einem Einsatzstück 54 aus geeignetem Material angeordnet sein kann. Die Anschlagfläche 53 ist derart dimensioniert, daß sie bei am Rohransatz 12 aufliegender Sperrkugel 50 gemäß Fig.2a und 2c nicht in Eingriff zu dieser Sperrkugel 50 gelangen kann, vielmehr radial außen über diese hinweg bewegbar ist. Falls jedoch der Sperrkolben 6 wie vorstehend zu Fig.1 beschrieben durch eine Druckdifferenz nach links zur Anlage an der Querwand 11 verschoben wird, wird die Sperrkugel 50 durch die Kugelmitnahmefläche 51 mitgenommen, läuft dabei auf die Kugelauflauffläche 52 auf und gelangt somit in eine zur Achse 26 radialäußere Position. In dieser Stellung gelangt, falls der Bremskolben 5 aus seiner rechten LÖsestellung nach links bewegt wird, die Anschlagfläche 53 alsbald gegen die Sperrkugel 50a, wodurch der Bremskolben 5 gegen weitere Verschiebung nach links verriegelt wird; diese Stellung ist in Fig.2b dargestellt.

Es ist ersichtlich, daß die Sperrkugel 50 in Verbindung mit der Anschlagfläche 53 vollständig die Funktion der Sperrklinke 25 mit dem Anschlagstück 36 gemäß Fig.1a übernimmt, die Funktionsweise des Federspeicherzylinders nach Fig.2a beim Betriebsbremsen und -lösen, bei Leitungsbruch, beim gebremsten Abstellen des Fahrzeuges und bei einer hierbei evt1. auftretenden Undichtigkeit entspricht unter Berücksichtigung der geänderten Sperrenkonstruktion vollständig den Erläuterungen zu Fig.1a und 1b, so daß sich weitere Ausführungen hierzu erübrigen.

Bei der Ausführung des Federspeicherzylinders nach Fig.3a wird als Sperre ein Schraubgesperre benutzt. Ein im übrigen dem Stößel 47 gemäß Fig.1a entsprechender Stößel 55 ist vermittels eines nichtselbsthemmenden Gewindes 56 mit einer Mutter 57 verschraubt. Auf der Mutter 57 ist ein Wälzlager 58 gehaltert, welches andererseits vermittels einer Feder 59 in einem am Sperrkolben 6 bremskolbenseitig am gesetzten, rohrartigen Ansatz 60 gehaltert ist. Der gehäusefeste Rohransatz 12 greift in den Ansatz 60 ein und endet in diesem mit einem stirnflächchenseitigen Widerlager, welches als eine verzahnte Kupplungsfläche 61 ausgebildet ist. Der Kupplungsfläche 61 steht eine entsprechend radial verzahnte Kupplungsfläche 62 der Mutter 57 gegenüber, die beiden Kupplungsflächen 61 und 62 bilden miteinander eine verzahnte, schaltbare Drehkupplung 61,62 zwischen dem Rohransatz 12 und der Mutter 57. Der Bremskolben 5 weist eine Ausnehmung 63 auf, in welche der Ansatz 60 eingreift; ein am Bremskolben 5 gehalterter Dichtring 64 wirkt mit der Außenfläche des Ansatzes 60 zusammen und dichtet die Lösekammer 15 gegen die Ausnehmung 63 ab. Im übrigen entspricht der Federspeicherzylinder 1 nach Fig.3a demjenigen nach Fig.1a unter Berücksichtigung eines Weglassens von dessen Sperrvorrichtung.

Bei vorhandener Druckluftbeaufschlagung nimmt der Federspeicherzylinder 1 die aus Fig.3a ersichtliche Stellung ein, welche weitgehend derjenigen nach Fig.1a entspricht, die Drehkupplung 61,62 ist dabei geöffnet und die Mutter 57 ist somit frei dreh- und verschraubbar. Treten bei eingebremst abgestelltem Fahrzeug wie vorstehend zu Fig.1a beschrieben langsame Druckabsenkungen im Raum 13 und der Lösekammer 15 auf, so behält der Sperrkolben 6 seine Stellung bei, während sich der Bremskolben 5 nach links verschiebt. Bei dieser Verschiebung verschraubt sich die Mutter 57 unter Drehen relativ zum Stößel 55 nach rechts, der Federspeicherzylinder 1 vermag die abnehmende Kraft des Betriebsbremszylinders 2 auszugleichen. Bei Wiederkehr der Druckluftbeaufschlagung kehren die Teile unter Zurückverschrauben der Mutter 57 in ihre in Fig.3a dargestellten Ausgangslagen zurück.

Tritt dagegen infolge eines Leitungsbruches im Raum 13 eine rasche Druckabsenkung ein, so wird der Sperrkolben 6 wie zu Fig.1a beschrieben alsbald nach links bis zur Anlage an der Querwand 11 verschoben, wobei er über die Feder 59 die Mutter 57 mitnimmt; die Mutter 57 verschraubt sich dabei auf dem Stößel 55 relativ nach links, bis die Drehkupplung 61,62 geschlossen ist; die Feder 59 bewirkt ein gutes Einrasten der Drehkupplung 61,62. Damit ist die in Fig.3b dargestellte Sperrstellung erreicht, in welcher die Mutter 57 drehfest gehaltert ist. Der Bremskolben 5 vermag sich bei nachfolgender Druckabsenkung in der Lösekammer 15 nicht nach links zu verschieben, da der Stößel 55 durch seinen Gewindeeingriff in die drehfest gehaltene Mutter 57 verriegelt ist; der Federspeicherzylinder 1 ist also in seiner Lösestellung verriegelt. Bei Wiederkehr des Beaufschlagungsdruckes kehren alle Teile in die Normalstellung nach Fig.3a zurück.

Beim Federspeicheruylinder nach Fig.4a ist als wesentliches Teil der Sperre ein Federring 65 vorgesehen, der in seinem Durchmesser veränderlich ist; vorzugsweise ist deshalb der Federring 65 radial aufgeschnitten. Der Federring 65 befindet sich innerhalb der Ausnehmung 35 des Bremskolbens 5 in einer nach radialaußen offenen Ringnut 66 des Rohransatzes 12, der wie nachstehend, insbesondere an Hand der Fig.4c beschrieben ausgebildet ist: Auf dem Rohransatz 12 sitzt fest und damit diesem zugehörend ein zweiteilig ausgebildeter Formringkörper 67, in welchem sich ein Ringraum 68 mit einer schlitzartigen, umlaufenden Öffnung 69 nach radialaußen befindet. Der Ferring 65 befindet sich in dieser Öffnung 69, er vermag sie je nach seinem Durchmesser nach radialaußen (Fig.4a, 4b) oder radialinnen (Fig.4c) zu überragen. In dem Ringraum 68 ist ein Ringkörper 70 axialverschieblich gelagert. Der Ringkörper 70 weist dem Sperrkolben 6 zugewandt einen Abschnitt mit geringem Außendurchmesser 71 und sperrkolbenabgewandt einen mit einer Stufe anschließenden Abschnitt mit großem Außendurchmesser 72 auf. Der Ringkörper 71 ist derart im Ringraum 68 verschieblich, daß entweder der Abschnitt geringen Außendurchmessers 71 (Fig.4a, 4c) oder der Abschnitt großen Außendurchmessers 72 (Fig.4b) sich radial innerhalb der Öffnung 69 befindet und somit den Boden der Ringnut 66 bildet. Die sperrkolbenseitige Wandung 73 des Ringraumes 68 ist von ringartig um den Rohransatz 12 verteilt angeordneten, vorzugsweise drei Stößeln 74 axialverschieblich durchsetzt, die Stößel 74 stützen den Ringkörper 70 gegen den Sperrkolben 6 ab, sperrkolbenabgewandt befindet sich im Ringraum 68 eine Feder 75, welche den Ringkörper 70 in Andrückrichtung an den Sperrkolben 6 belastet. Die radiale Außenwandung 76 der Ausnehmung 35 weist eine nach radialinnen offene Ringnut 77 auf, die bei in seiner in Fig.4a und 4b dargestellten Lösestellung des Bremskolbens 5 radial mit der Ringnut 66 des Rohransatzes 12 bzw. der Öffnung 69 fluchtet. In der Ausführungsform nach den Fig.4 ist der Federring 65 mit einer seinen Durchmesser elastisch zu vergrößern suchenden Eigenspannung versehen. Zufolge dieser Federringausbildung ist die dem Sperrkolben 6 abgewandte Seitenwandung 78 der Ringnut 77 kegelstumpfmantelartig abgeschrägt, der Federring 65 weist einen entsprechend abgeschrägten Seitenwandungsabschnitt auf. Im Bereich der Ringnut 77 ist die Außenwandung 76 durch einen Rohreinsatz 79 aus hartem, verschleißfesten Material verstärkt.

Im übrigen entspricht der Aufbau des Federspeicherzylinders nach den Fig.4 mit Ausnahme einer später zu beschreibenden Verkleinerung des Sperrkolbens 6 den zuvor beschriebenen Ausführungsbeispielen.

Bei druckluftgefülltem Raum 13 und druckluftgefüllter Lösekammer 15, also in Lösestellung nach Fig.4a befindlichem Federspeicherzylinder 1, hält der unter der Kraft der Feder 22 in seiner dem Bremskolben 5 zugewandten Endstellung befindliche Sperrkolben 6 über die Stößel 74 den Ringkörper 70 in der rechten Endstellung, in welcher sich sein Abschnitt geringeren Außendurchmessers 71 radial innerhalb der Öffnung 69 befindet. Der Federring 65 ist unter Eigenspannung aufgeweitet, er greift sowohl in die Ringnut 66, d.h. die Öffnung 69, als auch in die bei Lösestellung des Bremskolbens 5 mit dieser fluchtende Ringnut 77 ein. Zwischen dem Federring 65 und dem Abschnitt geringen Außendurchmessers 71 des Ringkörpers 70 befindet sich dabei ein freier Ringspalt, die Sperrstellung der Sperre ist vorbereitet, aber noch nicht verriegelt.

Werden die Räume 13 und 15 langsam druckabgesenkt, so daß der Sperrkolben 6 in seiner Lage verbleibt, dann drückt der sich unter der Speicherfederbelastung nach links verschiebende Bremskolben 5 über die abgeschrägte Seitenwandung 78 der Ringnut 77 anfänglich den Federring 65 radial bis zum Austritt aus dieser Ringnut 77 zusammen, wie es in Fig.4c dargestellt ist. Anschließend führt der Bremskolben 5 unbehindert seinen Bremshub aus, wobei der Federring 65 an der Innenwandung des Rohreinsatzes 79 entlanggleitet. Beim nachfolgenden Lösen laufen entsprechend umgekehrte Vorgänge ab, beim Erreichen der Lösestellung federt der Federring 65 wieder in die Ringnut 77 aus.

Beim raschen Druckabbau im Raum 13 drückt der sich aufbauende Differenzdruck den Sperrkolben 6 in dessen linke Endstellung, der Ringkörper 70 folgt unter seiner Belastung durch die Feder 75 dieser Verschiebung nach, wobei sein Abschnitt großen Außendurchmessers radial unterhalb der Öffnung 69 gelangt und somit den Boden der Ringnut 66 bildet; dabei untergreift der Ringkörper 70 den Federring 65 nahezu spielfrei und sichert diesen somit in seiner in beide Ringnuten 66 und 77 eingreifenden Stellung, wie es in Fig.4b dargestellt ist. Beim nachfolgenden Absinken des Druckes in der Lösekammer 15 kann daher der Federring 65 nicht radial zusammengedrückt werden, er verbleibt in seiner in beide Ringnuten 66 und 77 eingreifenden Stellung und sperrt somit formschlüssig den Bremskolben 5 gegen eine Verschiebung aus dessen Lösestellung.

Der Federring 65 kann abweichend zu vorstehender Beschreibung auch mit ihn elastisch zu verkleinern suchender Eigenspannung ausgeführt werden. Im Lösezustand befindet sich dann der Federring vollständig in der Ringnut 66 und die Sperrung des Bremskolbens 5 ist nicht vorbereitet. Der Ringkörper 70 ist zwischen seinen Abschnitten 71 und 72 mit einer Konusfläche zu versehen, auf welche der Federring 65 unter Aufweitung beim Linksverschieben des Ringkörpers 70 aufgleiten kann, wobei er in die Ringnut 77 eingreift und die Sperre somit einrastet. Der Federring kann hierbei ebenfalls eine geeignete, mit der Konusfläche zusammenwirkende Schrägfläche aufweisen, die Abschrägung der Seitenwandung 78 kann entfallen.

Bei den Ausführungsbeispielen nach den Figuren 1 bis 3 weist der Sperrkolben 6 einen dem Bremskolben 5 entsprechenden Außendurchmesser auf und es ist eine gemeinsame Zylinderwandung 4 für beiden Kolben 5 und 6 vorgesehen. Es hat sich gezeigt, daß hierbei der Sperrkolben 6 eine unnötig große Ansprechempfindlichkeit aufweist, sein Außendurchmesser kann daher verkleinert werden, wie es aus Fig.4a ersichtlich ist; diese Verkleinerung ist selbstverständlich auch bei den Sperrenausbildungen nach den Figuren 1 bis 3 möglich.

Gemäß Fig.4a trägt die Querwand 11 einen zur Lösekammer 15 vorspringenden, rohrstutzenartigen Zylinderansatz 80, an dessen Innenzylinderfläche 81 der Sperrkolben 6 wie zu den vorangehenden Ausführungsbeispielen beschrieben geführt ist. Die Innenzylinderfläche 81 und damit auch der Außendurchmesser des Sperrkolbens 6 sind wesentlich kleiner als der Durchmesser der Zylinderwandung 4. Die Durchmesserverhältnisse sind derart zu bestimmten, daß der Sperrkolben 6 eine ausreichende Ansprechempfindlichkeit behält; die Sperrenausbildung nach Fig. 4 mit im Lösezustand bereits vorbereiteter Sperrung des Bremskolbens begünstigt ein Verkleinern des Sperrkolbens 6, wodurch der Bauaufwand gemindert wird.

Selbstverständlich ist es auch möglich, andersartige als die vorstehend beschriebenen Sperrvorrichtungen vorzusehen, diese müssen lediglich in der rechten Endstellung des Sperrkolbens 6 ausgerastet und in der linken Endstellung des Sperrkolbens 6 eingerastet sein, wobei sie lediglich im eingerasteten Zustand den Bremskolben 5 in dessen Lösestellung zu verriegeln vermögen. Beispielsweise sind auch radialaußen, nahe der Zylinderwandung 4 befindliche Sperren möglich.

In weiterer Abänderung ist es auch möglich, die Querwand 11 wegzulassen, der Rohransatz 12 kann dabei beispielsweise durch einen Durchgriff im zentralen Teil des Bremskolbens 5 am Zylinderboden 9 gehaltert sein. Die Düse 16 ist dabei derart abzustimmen, daß bei mit geregelter Geschwindigkeit verlaufenden Lösevorgängen der Betriebsbremse der Sperrkolben 6 bereits nach links verschoben wird und die Sperre für den Bremskolben 6 einrastet: Der durch den Bremsdruck einer vorangehenden Vollbremsung in seine Lösestellung gezwungene Bremskolben 5 wird bei nachfolgend gelöster Betriebsbremsung also in seiner Lösestellung verriegelt, wie es aus der eingangs erwähnten DE-A 27 03 292 oder US-A 3 282 169 prinzipiell bekannt ist. Nur bei langsam verlaufenden Druckabsenkungen an einem eingebremst abgestellten Fahrzeug infolge Undichtigkeiten verbleibt der Sperrkolben 6 in seiner rechten Stellung und die Sperrvorrichtung somit gelöst, so daß der Bremskolben 5 sich nach links verschieben und eine Bremskraft abgeben kann.

In weiterer Abänderung ist es möglich, den Sperrkolben 6 an der Kolbendichtung 8 und/oder im Bereich des Dichtringes 20 geringfügig undicht zu führen, die Undichtigkeit ersetzt und wirkt hierbei wie die dann wegzulassende Düse 16.

Unter Beibehalten der vorstehend als wesentlich herausgestellten Funktionsweise der Federspeicherzylinder ist es durch eine einfache Weiterausbildung auch möglich, willkürlich allein vermittels des Federspeicherzylinders einzubremsen:
Eine erste Möglichkeit hierzu besteht darin, dem Druckluft-Speiseanschluß 14 ein Ventil vorzuschalten, welches willkürlich betätigbar ist und von Durchgang auf Absperren und langsames Entlüften des Raumes 13 schaltbar ist. Beim langsamen Entlüften des Raumes 13 verbleibt der Sperrkolben 6 in Ruhe, die Lösekammer 15 wird langsam mitentlüftet und der Bremskolben 5 verschiebt sich nach links, wobei er über den Stößel 47 bzw. 55 die Kolbenstange 44 mitnimmt und eine Bremsenzuspannkraft abzugeben vermag. Eine zweite Möglichkeit, welche zudem den Vorteil eines raschen Einbremsvorganges bietet, besteht darin, dem Druckluft-Speiseanaschluß 14 ein Absperrventil und der Lösekammer 15 über einen gesonderten, nicht dargestellten Anschluß ein Entlüftungsventil zuzuordnen: Wird bei geschlossenem Absperrventil das Entlüftungsventil geöffnet, ergibt sich eine rasche Entleerung der Lösekammer 15, der Sperrkolben 6 verbleibt jedenfalls in Ruhe und der Bremskolben 5 gelangt rasch in seine Bremsstellung.

### Bezugszeichenliste

- 1: Federspeicherzylinder
- 2: Betriebsbremszylinder
- 3: Zylindergehäuse
- 4: Zylinderwandung
- 5: Bremskolben
- 6: Sperrkolben
- 7: Kolbendichtung
- 8: Kolbendichtung
- 9: Zylinderboden
- 10: Speicherfeder
- 11: Querwand
- 12: Rohransatz
- 13: Raum
- 14: Druckluft-Speiseanschluß
- 15: Lösekammer
- 16: Düse
- 17: Ringnut
- 18: Radialnutring
- 19: Bohrung
- 20: Dichtring
- 21: Abschnitt
- 22: Feder
- 23: Abschnitt
- 24: Widerlager
- 25: Sperrklinke
- 26: Achse
- 27: Bolzen
- 28: Ansatz
- 29: Feder
- 30: Anschlagring
- 31: Rohransatz
- 32: Ansatz
- 33: Ausnehmung
- 34: Dichtring
- 35: Ausnehmung
- 36: Anschlagstück
- 37: Teil
- 38: Anschlagkante
- 39: Rohranschluß
- 40: Kammer
- 41: Kolben
- 42: Kolbenrückdruckfeder
- 43: Außendruckkammer
- 44: Kolbenstange
- 45: Stößel
- 46: Dichtring
- 47: Stößel
- 45,47: Stößelvorrichtung
- 48: Fortsatz
- 49: Radialbohrung
- 50: Sperrkugel
- 51: Kugelmitnahmefläche
- 52: Kugelauflauffläche
- 53: Anschlagfläche
- 54: Einsatzstrich
- 55: Stößel
- 56: Gewinde
- 57: Mutter
- 58: Wälzlager
- 59: Feder
- 60: Ansatz
- 61: Kupplungsfläche
- 62: Kupplungsfläche
- 61,62: Drehkupplung
- 63: Ausnehmung
- 64: Dichtring
- 65: Federring
- 66: Ringnut
- 67: Formringkörper
- 68: Ringraum
- 69: Öffnung
- 70: Ringkörper
- 71: Abschnitt geringen Außdurchmessers
- 72: Abschnitt großen Außendurchmesser
- 73: Wandung
- 74: Stößel
- 75: Feder
- 76: Außenwandung
- 77: Ringnut
- 78: Seitenwandung
- 79: Rohreinsatz
- 80: Zylinderansatz
- 81: Innenzylinderfläche

## Patentansprüche

1. Federspeicherzylinder für druckluftbetätigte Fahrzeugbremsen, mit einem vom in einer Lösekammer (15) herrschenden Druck entgegen der Kraft einer Speicherfeder (10) beaufschlagten Bremskolben (5) und mit einer Sperrvorrichtung zum formschlüssigen Verriegeln des Bremskolbens (5) in dessen gespannter Speicherfeder (10) entsprechender Lösestellung, wobei die Lösekammer (15) durch eine Düse (16) mit einem Druckluft-Speiseanschluß (14) verbunden ist und wobei die Sperrvorrichtung einen Sperrkolben (6) zum Schalten einer mechanischen Sperre für den Bremskolben (5) aufweist und der Sperrkolben (6) in Einrastrichtung der Sperre vom lösekammerseitigen Druck nach der Düse (16) entgegen dem vor der Düse (16) anstehenden Druck beaufschlagt ist, dadurch gekennzeichnet, daß der Sperrkolben (6) als zum Bremskolben (5) gleichachsiger und beidseitig wenigstens annähernd gleichgroße Beaufschlagungsflächen aufweisender Ringkolben ausgebildet ist, der radialinnen an einem zylindergehäusefesten Rohransatz (12) wenigstens annähernd dicht geführt ist, der gegenüberliegend zum Bremskolben (5) die Lösekammer (15) und andererseits einen unmittelbar an den Druckluft-Speiseanschluß (14) anschließenden Raum (13) begrenzt und der von der Düse (16) überbrückt ist.

2. Federspeicherzylinder nach Anspruch 1, dadurch gekennzeichnet, daß der Sperrkolben (6) seitens des Raumes (13) von einer Feder (22) belastet ist.

3. Federspeicherzylinder nach Anspruch 1 oder 2, dadurch gekennzeichnet, daß der Sperrkolben (6) radialaußen- oder -innenseitig eine nur einseitig, in Strömungsrichtung von der Lösekammer (15) zum Raum (13) dichtende Kolbendichtung (18) aufweist.

4. Federspeicherzylinder nach einem oder mehreren der vorstehenden Ansprüche, dadurch gekennzeichnet, daß der Rohransatz (12) in die Lösekammer (15) ragt und dort ein in der Einraststellung der Sperre wirksames Widerlager (24;51;61;66) für ein mit dem Sperrkolben (6) bewegliches Teil (25;50;62;65) der Sperre bildet.

5. Federspeicherzylinder nach Anspruch 4, in Ausbildung als Kombizylinder mit einem kammerseitig angesetzten Betriebsbremszylinder (2), dadurch gekennzeichnet, daß der Bremskolben (5) verschieblich auf dem Rohransatz (12) gelagert ist und durch eine den Rohransatz (12) verschieblich durchgreifende Stößelvorrichtung (45,47) mit dem Kolben (41) des Betriebsbremszylinders (2) gekoppelt ist.

6. Federspeicherzylinder nach Anspruch 5, dadurch gekennzeichnet, daß der Rohransatz (12) an einer den Raum (13) betriebsbremszylinderseitig begrenzenden Querwand (11) gehaltert ist und daß zwischen dem Bremskolben (5) und dem Rohransatz (12) oder einem diesen umgebenden, rohrartigen Ansatz (60) des Sperrkolbens (6) ein Dichtring (34;64) vorgesehen ist.

7. Federspeicherzylinder nach Anspruch 6, dadurch gekennzeichnet, daß der Bremskolben (5) eine den Rohransatz (12) umgebende, ringförmige, zum Sperrkolben (6) hin offene Ausnehmung (35) zur wenigstens zeitweiligen Aufnahme von der Sperre zugehörende Teilen (25;50;65) aufweist.

8. Federspeicherzylinder nach Anspruch 7, dadurch gekennzeichnet, daß am Sperrkolben (6) nahe dessen radialinneren Randes und dem Bremskolben (5) zugewandt wenigstens eine Sperrklinke (25) um eine die Zylinderachse (26) rechtwinklig überkreuzende Achse (27) drehbar angelenkt ist, welche von einer Feder (29) in Richtung zu einer zur Zylinderachse (26) parallel verlaufenden Entsperrstellung belastet ist, in welcher sie in die Ausnehmung des Bremskolbens (5) einzutreten vermag, und daß beim Bewegen des Sperrkolbens (6) in Entfernungsrichtung vom Bremskolben (5) die Sperrklinke (25) in Anlage zum Widerlager (24) gelangt und entgegen ihrer Federbelastung (29) in eine schräg nach radialaußen verlaufende Sperrstellung schwenkbar ist, in welcher der Bremskolben (5) durch Anlage an der achsenabgewandten Stirnfläche der Sperrklinke (25) in der Lösestellung verriegelt ist.

9. Federspeicherzylinder nach Anspruch 7, dadurch gekennzeichnet, daß die Sperre als Kugelsperre mit wenigstens einer am Rohransatz (12) befindlichen Sperrkugel (50) ausgebildet ist, wobei bezogen auf die Sperrkugel (50) der Rohransatz (12) bremskolbenabgewandt eine nach radialaußen ansteigende Kugelauflauffläche (52) und der Sperrkolben (6) andererseits als Widerlager eine Kugelmitnahmefläche (51) aufweist, derart, daß beim Bewegen des Sperrkolbens (6) in Entfernungsrichtung vom Bremskolben (5) die Sperrkugel (50) auf die Kugelauflauffläche (52)aufläuft, und daß der Bremskolben (5) im Bereich seiner Ausnehmung (35) eine nur bei auf der Kugelauflauffläche (52) aufgelaufener Sperrkugel (50) mit dieser in Eingriff bringbare und den Bremskolben (5) in dessen Lösestellung verriegelnde Anschlagfläche (53) aufweist.

10. Federspeicherzylinder nach Anspruch 4, in Ausbildung als Kombizylinder mit einem kammerseitig angesetzten Betriebsbremszylinder (2), dadurch gekennzeichnet, daß der Bremskolben (5) abgedichtet verschieblich auf einem den zylindergehäusefesten, ersten Rohransatz (12) umgebenden, zweiten Rohransatz (60) des Sperrkolbens (6) gelagert ist, daß mit einem nichtselbsthemmenden Gewinde (56) eines bremskolbenfesten Stößels (55), der einer den ersten Rohransatz (12) verschieblich durchgreifenden, den Bremskolben (5) mit der Kolbenstange (44) des Betriebsbremszylinders (2) koppelnden Stößelvorrichtung (45,55) zugehört, eine Mutter (57) verschraubt ist, welche in Entfernungsrichtung vom Sperrkolben (6) drehbar gegen den zweiten Rohransatz (60) abgestützt ist, und daß an der freien Stirnfläche des ersten Rohransatzen (12) als Widerlager eine Kupplungsfläche (61) einer verzahnten, schaltbaren Drehkupplung (61,62) zur Mutter (57) ausgebildet ist.

11. Federspeicherzylinder nach Anspruch 7, dadurch gekennzeichnet, daß die Sperre einen in seinem Durchmesser veränderlichen Federring (65) aufweist, der sich innerhalb der Ausnehmung (35) des Bremskolbens (5) in einer nach radialaußen offenen Ringnut (66) des Rohransatzes (12) befindet, daß der radialinnere Boden der Ringnut (66) von einem mit dem Sperrkolben (6) beweglichen Ringkörper (70) mit axial abgestuftem Außendurchmesser (71;72) gebildet ist, wobei der Boden bei dem Bremskolben (5) benachbarter Endstellung des Sperrkolbens (6) vom Abschnitt des Ringkörpers (70) mit kleinerem (71) und bei dem Bremskolben (5) entfernter Endstellung des sperrkolbens (6) vom Abschnitt des Ringkörpers (70) mit größerem Außendurchmesser (72) gebildet ist, und daß die radiale Außenwandung (76) der Ausnehmung (35) eine nach radialinnen offene Ringnut (77) aufweist, die bei in Lösestellung befindlichem Bremskolben (5) mit der Ringnut (66) des Rohransatzes (12) radial fluchtet, wobei der Federring (65) bei vom Abschnitt des Ringkörpers mit kleinerem Außendurchmesser (71) gebildetem Boden der Ringnut (66) sich gänzlich in dieser Ringnut (66), bei vom Abschnitt mit größerem Außendurchmesser (72) gebildeten Boden dagegen sich von diesem radial abgestützt zugleich in beiden, radial fluchtenden Ringnuten (66 und 77) befindet.

12. Federspeicherzylinder nach Anspruch 11, dadurch gekennzeichnet, daß der Federring (65) eine seinen Durchmesser elastisch zu vergrößern suchende Eigenspannung aufweist und daß die dem Sperrkolben (6) abgewandten Seitenwandung (78) der Ringnut (77) der Ausnehmung (35) und/oder des Federringes (65) kegelstumpfmantelartig abgeschrägt ist.

13. Federspeicherzylinder nach Anspruch 11, dadurch gekennzeichnet, daß der Federring eine seinen Durchmesser elastisch zu verkleinern suchende Eigenspannung aufweist und daß der Ringkörper zwischen seinen beiden Abschnitten unterschiedlichen Außendurchmessers einen Abschnitt mit einer diese verbindenden Kegelmantelstumpffläche aufweist.

14. Federspeicherzylinder nach Anspruch 12 oder 13, dadurch gekennzeichnet, daß der Rohransatz (12) an seinem Außenumfang fest mit einem ggf. mehrteiligen Formringkörper (67) versehen ist, in welchem zur Bildung der Ringnut (66) des Rohransatzes (12) ein Ringraum (68) mit einer schlitzartigen, umlaufenden und den Federring (65) aufnehmenden Öffnung (69) nach radialaußen ausgebildet ist, daß in dem Ringraum (68) der Ringkörper (70) axialverschieblich gelagert ist und daß der Ringkörper (70) über die sperrkolbenseitige Wandungen (73) des Ringraumes (68) axialverschieblich durchsetzende Stößel (74) mit dem Sperrkolben (6) gekoppelt und von einer sperrkolbenabgewandt im Ringraum (68) angeordneten Feder (75) in Andrückrichtung an den Sperrkolben (6) belastet ist.

15. Federspeicherzylinder nach einem oder mehreren der vorstehenden Ansprüche 1 bis 14, dadurch gekennzeichnet, daß der Sperrkolben (6) zum Bremskolben (5) wenigstens annähernd gleichgroße Beaufschlagungsflächen aufweist und daß der Sperrkolben (6) radialaußen an der auch der Führung des Bremskolbens (5) dienenden Zylinderwandung (4) wenigstens in Strömungsrichtung von der Lösekammer (15) zum andersseitig des Sperrkolbens (6) befindlichen Raum (13) zumindest annähernd dicht geführt ist.

16. Federspeicherzylinder nach einem odere mehreren der Ansprüche 1 bis 14, dadurch gekennzeichnet, daß der Sperrkolben (6) radialaußen an einem rohrstutzenartig zur Lösekammer (15) vorspringenden Zylinderansatz (80) der Querwand (11) wenigstens in Strömungsrichtung von der Lösekammer (15) zum andersseitig des Sperrkolbens (6) befindlichen Raum (13) zumindest annähernd dicht geführt ist.

17. Federspeicherzylinder nach einem oder mehreren der vorstehenden Ansprüche, dadurch gekennzeichnet, daß dem Druckluft-Speiseanschluß (14) ein willkürlich schaltbares Ventil vorgeschaltet ist, welches auf Durchgang oder Sperren mit langsamer Entlüftung des Druckluft-Speiseanschlusses (14) schaltbar ist.

18. Federspeicherzylinder nach einem oder mehreren der Ansprüche 1 bis 16, dadurch gekennzeichnet, daß eine willkürlich schaltbare Ventilvorrichtung vorgesehen ist, welche dem Druckluft-Speiseanschluß (14) vorgeschaltet ist und einen Anschluß zur Lösekammer (15) aufweist und welche bezüglich des Druckluft-Speisenschlusses (14) auf Durchgang und Absperren des Anschlusses zur Lösekammer (15) oder Sperren des Durchganges und Entlüften des Anschlusses schaltbar ist.

## Claims

1. A spring-loaded cylinder for pneumatically operated vehicle brakes, with a brake piston (5) acted upon by the pressure prevailing in a release chamber (15) against the force of a pre-loaded spring (10) and with a blocking device for positive-locking arresting of the brake piston (5) in its release position corresponding to the pre-loaded spring (10) being tightened, wherein the release chamber (15) is connected by a nozzle (16) to a compressed air feed connection (14) and wherein the blocking device has a blocking piston (6) for operating a mechanical blocking means for the brake piston (5) and the blocking piston (6) is acted upon, in the locking-in direction of the blocking means, by the pressure on the side of the release chamber after the nozzle (16) against the pressure present in front of the nozzle (16), characterised in that the blocking piston (6) is formed as an annular piston coaxial to the brake piston (5) and having on both sides at leats approximately equally-sized acting surfaces, which piston is guided radially inwardly on a tubular extension (12), fixed on the cylinder housing, at least in an approximately sealed manner, defines the release chamber (15) opposite the brake piston (5), and, on the other side, a chamber (13) connected directly to the compressed air feed connection (14), and is bridged by the nozzle (16).

2. A spring-loaded cylinder according to claim 1, characterised in that the blocking piston (6) is loaded by a spring (22) on the side of the chamber (13).

3. A spring-loaded cylinder according to claim 1 or 2, characterised in that the blocking piston (6) has on the radially outer side on the radially inner side a piston seal only on one side in the flow direction from the release chamber (15) to the chamber (13).

4. A spring-loaded cylinder according to one or several of the preceding claims, characterised in that the tubular extension (12) projects into the release chamber (15) and there forms an abutment (24;51;61;66) acting in the locking-in position of the blocking means for a part (25;50;62;65) of the blocking means movable with the blocking piston (6).

5. A spring-loaded cylinder according to claim 4, formed as a combined cylinder with a service brake cylinder (2) attached on the chamber side, characterised in that the brake piston (5) is mounted in a displaceable manner on the tubular extension piece (12) and, via a thrust rod device (45, 47) displaceably penetrating the tubular extension piece (12), is coupled to the piston (41) of the working brake cylinder (2).

6. A spring-loaded cylinder according to claim 5, characterised in that the tubular extension piece (12) is held on a transverse wall (11) defining the chamber (13) on the side of the working brake cylinder and in that a sealing ring (34;64) is provided between the brake cylinder (5) and the tubular extension piece (12) or a tubular extension (60) of the blocking piston (6) surrounding the tubular extension piece (12).

7. A spring-loaded cylinder according to claim 6, characterised in that the brake cylinder (5) has an annular recess (35) surrounding the tubular extension piece (12) and open towards the blocking piston (6) for at least temporary reception of parts (25;50;65) belonging to the blocking means.

8. A spring-loaded cylinder according to claim 7, charactersied in that on the blocking cylinder (6) at least one pawl (25) is hinged in a rotatable manner, close to the radially inner edge of the cylinder and facing the brake piston (5), about an axis (27) crossing over the cylinder axis (26) at right angles, which is loaded by a spring (29) in the direction of an unlocked configuration extending parallel to the cylinder axis (26) in which it may enter the recess of the brake piston (5) and in that when moving the blocking piston (6) in the removal direction from the brake piston (5) the pawl (25) comes to bear against the abutment (24) and is pivotable against its spring load (29) into a blocking position extending inclined and radially outwardly in which the brake piston (5) is locked in the release piston by bearing on the end face of the pawl (25) facing away from the axis.

9. A spring-loaded cylinder according to claim 7, characterised in that the blocking means is formed as a spherical block with at least one blocking ball (50) located on the tubular extension piece (12), wherein relative to the blocking ball (50) the tubular extension piece (12) has facing away from the brake piston a radially-outwardly rising ball running surface (52) and the blocking piston (6), on the other hand, has a spherical entrainment surface (51) as an abutment, so that with movement of the blocking piston (6) in the removal direction from the brake piston (5) the blocking ball (50) runs up on to the ball running surface (52) and in that the brake piston (5) in the region of its recess (35) has a stop surface (53) able to be brought into engagement with the blocking ball (50) when it has run onto the ball running surface (52) and locking the brake piston (5) in its release position.

10. A spring-loaded cylinder according to claim 4, formed as a combined cylinder with a working brake cylinder (2) attached to the chamber side, characterised in that the brake piston (5) is mounted sealed in a displaceable manner on a second tubular extension piece (60) of the blocking piston (6) surrounding the first tubular extension piece (12) fixed on the cylinder housing, in that a nut (57) is screwed to a thread (56), which is not self-locking, of a thrust rod (55) fixed on the brake piston, this rod belonging to a thrust rod device (45,55) penetrating in a displaceable manner the first tubular extension piece (12) and coupling the brake piston (5) to the piston rod (44) of the working brake cylinder (2), which nut (57) is supported in the removal direction from the blocking piston (6) rotatably against the second tubular extension piece (60), and in that formed on the free end face of the first tubular extension piece (12) as an abutment there is a coupling surface (61) of a toothed switchable rotary coupling (61,62) for the nut (57).

11. A spring-loaded cylinder according to claim 7, characterised in that the blocking means has a spring ring (65) able to alter in its diameter, which is located within the recess (35) of the brake piston (5) in an annular groove (66) of the tubular extension piece (12) open radially outwardly, in that the radial inner base of the annular groove (66) is formed by an annular (70) movable with the blocking piston (6) with an axially stepped outer diameter (71;72), wherein the base is formed in the end position of the blocking piston (6) adjacent to the brake piston by the section of the annular body (70) with the smaller outer diameter (71) and in the end position of the blocking piston (6) away from the brake piston (5) by the section of annular body (70) with greater outer diameter (72), and in that the radial outer wall (76) of the recess (35) has a radially inwardly open annular groove (77), which with the brake piston (5) located in the release position, is radially aligned with the annular groove (66) of the tubular extension piece (12), wherein the spring ring (65), when the base of the annular groove (66) is formed by the section of the annular body with the smaller outer diameter (71), is located completely in this annular groove (66), (and) when the base is formed by the section with the larger outer diameter (72), on the other hand, is located radially supported by this base in both the radially aligned annular grooves (66 and 67).

12. A spring-loaded cylinder according to claim 11, characterised in that the spring ring (65) has internal stress tending to enlarge its diameter elastically and in that the side wall (78), facing away from the locking piston (6), of the annular groove (77) of the recess (35) and/or of the spring ring (65) is inclined in the manner of a truncated conical surface.

13. A spring-loaded cylinder according to claim 11, characterised in that the spring ring has internal stress tending to reduce its diameter elastically and in that the annular body between its two sections of differing outer diameter has a section with a truncated conical surface connecting these sections.

14. A spring-loaded cylinder according to claim 12 or 13, characterised in that the tubular extension piece (12) is provided on its outer periphery in a fixed manner with a possibly multi-part shaped annular body (67) in which for forming the annular groove (66) of the tubular extension piece (12) an annular chamber (68) with a slit-like circumferential opening (69) receiving the spring ring (65) is formed radially outwardly, in that in the annular chamber (68) the annular body (70) is mounted in an axially displaceable manner and in that the annular body (70) is coupled by way of thrust rods (74) penetrating the walls (73) of the annular chamber (68) on the side of the blocking piston in an axially displaceable manner and is loaded by a spring (75) arranged in the annular chamber (68) away from the blocking piston in the direction of pressure on the blocking piston (6).

15. A spring-loaded cylinder according to one or several of the preceding claims 1 to 14, characterised in that the blocking piston (6) has at least approximately equally-sized acting surfaces to the brake piston (5) and in that the blocking piston (6) is guided radially outwardly on the cylinder wall (4) also serving to guide the brake piston (5) in an at least approximately sealed manner at least in the flow direction from the release chamber (15) to the chamber (13) located on the other side of the blocking piston (6).

16. A spring-loaded cylinder according to one or several of claims 1 to 14, characterised in that the blocking piston (6) is guided radially outwardly on a cylinder projection (80) of the transverse wall (11) projecting like a tubular socket to the release chamber (15), in an at least approximately sealed manner at least in the flow direction from the release chamber (15) to the chamber (13) located at the other side of the blocking piston (6).

17. A spring-loaded cylinder according to one or several of the preceding claims, characterised in that the compressed air feed connection (14) has connected before it a valve able to be switched arbitrarily, which is switchable to passage or blocking with slow ventilation of the compressed air feed connection (14).

18. Spring-loaded cylinder according to one or several of claims 1 to 16, characterised in that a valve device able to be switched arbitrarily is provided which is connected before the compressed air feed connection (14) and has a connection to the release chamber (15) and which is switchable for passage with regard to the compressed air feed connection (14) and blocking of the connection to the release chamber (15) or blocking of the passage and ventilation of the connection.

## Revendications

1. Cylindre à ressort accumulateur d'énergie pour des freins de véhicules, actionnés par de l'air comprimé, comportant un piston de frein chargé par la pression qui règne dans une chambre de desserrage (15), à l'encontre de la force d'un ressort accumulateur d'énergie (10), et un dispositif de verrouillage pour verrouiller, par formes complémentaires, le piston de frein dans sa position de desserrage, qui correspond à l'armement du ressort accumulateur (10), du type dans lequel la chambre de desserrage (15) est reliée, par l'intermédiaire d'une tuyère (16), au raccord d'alimentation (14) en air comprimé, et dans lequel le dispositif de verrouillage comporte un piston de verrouillage (6) pour actionner un verrou mécanique pour le piston de frein (5), alors que le piston de verrouillage (6) est chargée, dans le sens du verrouillage, par la pression qui règne, après la tuyère (16), côté chambre de desserrage, à l'encontre de la pression qui règne à l'avant de la tuyère (16), caractérisé par le fait que le piston de verrouillage (6) est réalisé sous la forme d'un piston annulaire qui est coaxial avec le piston de frein (5), qui présente sur ses deux côtés des surfaces de charge au moins approximativement égales, qui est guidé radialement à l'intérieur d'un appendice tubulaire (12) solidaire du carter de cylindre, de manière à peu près étanche, qui délimite, en face du piston de frein (5), la chambre de desserrage (15), et, d'autre part, une chambre (13) qui fait directement suite audit raccord d'alimentation (14) en air comprimé, et qui est shunté par la tuyère (16).

2. Cylindre à ressort accumulateur d'énergie selon la revendication 1, caractérisé par le fait que le piston de verrouillage (6) est chargé, côté de la chambre (13), par un ressort (22).

3. Cylindre à ressort accumulateur d'énergie selon la revendication 1 ou 2, caractérisé par le fait que le piston de verrouillage (6) présente, côté radialement à l'extérieur ou radialement à l'intérieur, une garniture de piston (18) assurant l'étanchéité que sur un côté, dans le sens de l'écoulement de la chambre de desserrage (15) vers la chambre (13).

4. Cylindre à ressort accumulateur d'énergie selon une ou plusieurs des revendications précédentes, caractérisé par le fait que l'appendice tubulaire (3) pénètre dans la chambre de desserrage (15) et y forme, dans la position d'enclenchement du verrou, un contre-appui efficace (24 ; 51; 61 ; 66) pour un élément (25 ; 50 ; 62 ; 65) qui est mobile avec le piston de verrouillage (6).

5. Cylindre à ressort accumulateur d'énergie selon la revendication 4, réalisé comme cylindre combiné à cylindre de frein de service (2) monté côté chambre, caractérisé par le fait que le piston de frein (5) est monté coulissant sur l'appendice tubulaire (12), et il est accouplé au piston (41) du cylindre de frein de service, par l'intermédiaire d'un dispositif à poussoir (45, 47), mobile par rapport à l'appendice tubulaire.

6. Cylindre à ressort accumulateur d'énergie selon la revendication 5, caractérisé par le fait que l'appendice tubulaire (12) est monté sur une paroi transversale (11) qui délimite la chambre (13) du côté du cylindre de frein de service, et qu'entre le piston de frein (5) et l'appendice tubulaire (12) ou un appendice tubulaire (60) du piston de verrouillage qui l'entoure, est prévue une bague d'étanchéité (34 ; 64).

7. Cylindre à ressort accumulateur d'énergie selon la revendication 6, caractérisé par le fait que le piston de frein (5) comporte une cavité (35) qui entoure l'appendice tubulaire (12), qui est de forme annulaire et qui est ouverte du côté du piston de verrouillage (6) pour recevoir, au moins temporairement, des éléments (25 ; 50 ; 45) appartenant au verrou.

8. Cylindre à ressort accumulateur d'énergie selon la revendication 7, caractérisé par le fait que sur le piston de verrouillage (6), près de son bord radialement intérieur et du côté du piston de frein (5), est articulé autour d'un axe (27) coupant à angle droit l'axe (26) du cylindre, au moins un cliquet (25) qui est chargé par un ressort (29) en direction d'une position de déverrouillage qui s'étend parallèlement à l'axe (26) du cylindre et dans laquelle il peut pénétrer dans la cavité du piston de frein (5), et que lors du déplacement du piston de verrouillage (6) dans le sens de l'éloignement par rapport au piston de frein (5), le cliquet (25) vient porter contre le contre-appui, et est susceptible de basculer, à l'encontre de la charge élastique (29) qu'il supporte, dans une position de verrouillage oblique et s'étendant radialement vers l'extérieur, et dans laquelle le piston de frein (5) est verrouillé dans la position de desserrage, par application contre la face frontale du cliquet (25), éloignée de l'axe.

9. Cylindre à ressort accumulateur d'énergie selon la revendication 7, caractérisé par le fait que le verrou est réalisé sous la forme d'un verrou à bille comportant au moins une bille de verrouillage (50) associée à l'appendice tubulaire (12), ce dernier comportant, du côté éloigné du piston de frein, et rapporté à la bille de verrouillage (50), une rampe (52) inclinée radialement vers l'extérieur et vers le haut pour ladite bille (50), et le piston de verrouillage (6) présentant une surface d'entrainement (51) de la bille (50) et formant contre-appui, la réalisation étant telle que lors du déplacement du piston de verrouillage (6) dans le sens de l'éloignement par rapport au piston de frein (5), la bille de verrouillage (50) monte sur la rampe (52), le piston de frein (5) présentant, dans la zone de sa cavité (35), une surface de butée (53) qui ne peut être amenée en prise avec une bille, que lorsq'une bille de verrouillage (50) se trouve engagée sur ladite rampe, et bloquer le piston de frein dans sa position de desserrage;

10. Cylindre à ressort accumulateur d'énergie selon la revendication 4, réalisé sous la forme d'un cylindre combiné ou cylindre double, comportant, côté chambre, un cylindre de frein de service ajouté (2), caractérisé par le fait que le piston de frein (5) est monté à coulissement et avec étanchéité sur un second appendice tubulaire (60) du piston de verrouillage (6), qui entoure le premier appendice tubulaire (12) qui est solidaire du carter du cylindre, qu'avec un filetage non-autobloquant (56) d'un poussoir (55) solidaire du piston de frein, qui appartient à un dipositif à poussoir (45, 55) qui traverse à coulissement le premier appendice tubulaire (12) et qui accouple le piston de frein (5) à la tige de piston (44) du cylindre de frein de service (2), est en prise un écrou (57) qui, dans le sens de l'éloignement par rapport au piston de verrouillage, est susceptible de tourner en prenant appui contre le premier appendice tubulaire (60), et que sur la face frontale libre du premier appendice tubulaire (12), est conformée, comme contre-appui de l'écrou (57), une surface d'accouplement (61) d'un accouplement denté et commutable.

11. Cylindre à ressort accumulateur d'énergie selon la revendication 7, caractérisé par le fait que le système de verrouillage comporte un anneau élastique (65) à diamètre modifiable, qui est situé à l'intérieur de la cavité (35) du piston de frein (5), dans une gorge annulaire (66), ouverte radialement vers l'extérieur, de l'appendice tubulaire (12), que le fond, radialement intérieur, de la gorge annulaire (66) est formé par un corps annulaire (70) qui est mobile avec le piston de verrouillage (6) et présente axialement un diamètre extérieur en paliers ou grandins (71 ;72), ledit fond étant formé avec la section du corps annulaire (70) de petit diamètre, dans la position d'extrémité du piston de verrouillage, voisine du piston de frein, et étant formé par la section du corps annulaire (70) de plus grand diamètre, dans la position d'extrémité du piston de verrouillage (6), éloignée du piston de frein (5), et que la paroi radialement extérieure (76) de la cavité (35) présente une gorge annulaire (77) ouverte radialeemnt vers l'intérieur qui, lorsque le piston de frein (5) est dans sa position de desserrage, est alignée avec la gorge annulaire (66) de l'appendice tubulaire (12), la réalisation étant telle que lorsque le fond de la gorge annulaire (66) est formé par la section de corps annulaire à petit diamètre extérieur, l'anneau élastique (65) se situe entièrement dans cette gorge annulaire (66), alors que lorsque le fond est formé par la section à plus grand diamètre extérieur (72), l'anneau élastique (65) se situe en même temps dans les deux gorges annulaires et alignés (66 et 77), en étant en même temps soutenu par le fond de plus grand diamètre.

12. Cylindre à ressort accumulateur d'énergie selon la revendication 11, caractérisé par le fait que l'anneau élastique (65) possède une tension propre qui tend à agrandir élastiquement son diamètre, et que la paroi latérale (78) de la gorge annulaire (77) de la cavité (35) et ou de l'anneau élastique (65), qui est éloignée du piston de verrouillage (6), est biseautée coniquement.

13. Cylindre à ressort accumulateur d'énergie selon la revendication 11, caractérisé par le fait que l'anneau élastique possède une tension propre qui tend à réduire élastiquement son diamètre, et que le corps annulaire possède entre ses deux sections de diamètres extérieurs différentes, une section à surface latérale tronconique qui relie lesdites deux sections.

14. Cylindre à ressort accumulateur d'énergie selon la revendication 12 ou 13, caractérisé par le fait que l'appendice tubulaire (12) est pourvu, à sa périphérie extérieure, d'un corps annulaire conformé (67) qui en est solidaire et constitué d'une pièce ou éventuellement de plusieurs pièces, et dans lequel, pour former la gorge annulaire (66) de l'appendice tubulaire (12), est réalisée, radialement vers l'extérieur, une chambre annulaire (68) à ouverture (69) en forme de fente qui s'étend dans le sens circulaire et qui reçoit l'anneau élastique (65), que dans la chambre annulaire (68), le corps annulaire (70) est monté de façon à pouvoir se déplacer axialement, et que le coprs annulaire (70) est accouplé, par l'intermédiaire des poussoirs (74) qui traversent avec mobilité axiale les parois (73) de la chabmre annulaire (68), situées du côté du piston de verrouillage, avec le piston de verrouillage (6), et est appliqué contre le piston de verrouillage (6) par un ressort (75) disposé dans la chambre annulaire (68), en position éloignée du piston de verrouillage.

15. Cylindre à ressort accumulateur d'énergie selon une ou plusieurs des revendications précédentes 1 à 14, caractérisé par le fait que le piston de verrouillage (6) présente, par rapport au piston de freinage (5), au moins approximativement des surfaces de charge de même grandeur, et que le piston de verrouillage (6), est guidé, au moins de façon étanche, au niveau de la paroi de cylindre (4) et radialement vers l'extérieur, et ce au moins dans le sens de l'écoulement de la chambre de desserrage (15) vers la chambre (13) qui se trouve de l'autre côté du piston de verrouillage.

16. Cylindre à ressort accumulateur d'énergie selon une ou plusieurs des revendications 1 à 14, caractérisé par le fait que le piston de verrouillage (6) est guidé au moins à peu près avec étanchéité, radialement vers l'extérieur, au niveau de la paroi transversale (11) d'un appendice cylindrique (80), en forme d'embout tubulaire et saillant vers la chambre de desserrage (15), et ce, entre la chambre de desserrage (15) et la chambre (13) se situant du côté opposé au piston de verrouillage (6).

17. Cylindre à ressort accumulateur d'énergie selon une ou plusieurs des revendications précédentes, caractérisé par le fait qu'en amont du raccord d'alimentation en air comprimé (14) est prévu une soupape à commande arbitraire qui est commutable en position d'ouverture ou de fermeture, avec désaération lente dudit raccord (14).

18. Cylindre à ressort accumulateur d'énergie, selon une ou plusieurs des revendications 1 à 16, caractérisé par le fait qu'il est prévu un agencement à soupape à commande arbitraire, qui est monté en amont du raccord d'alimentation en air comprimé et comporte une liaison avec la chambre de desserrage, et qui est susceptible, pour ce qui concerne ledit raccord (14), d'être commuté en position d'ouverture ou de fermeture de la liaison avec la chambre de desserrage (15) ou en position de fermeture du passage et de désaération de la liaison.
